# EUROPEAN PATENT APPLICATION

(11) **EP 3 431 857 A1**
(43) Date of publication of application: **23.01.2019**
(21) Application number: 17766104.8
(22) Date of filing: 01.02.2017
(51) Int. Cl.: F16L 59/065, E04B 1/80, F25D 23/06

(54) **VACUUM THERMAL INSULATION MATERIAL, AND HOME APPLIANCE, HOUSE WALL AND TRANSPORTATION EQUIPMENT PROVIDED WITH SAME**

(30) Priority: 18.03.2016 JP 2016055438
(71) Applicant: Panasonic Intellectual Property Management Co., Ltd., Osaka-shi, Osaka 540-6207 (JP)
(72) Inventor: YUASA, Akiko, Osaka-Shi Osaka 540-6207 (JP); SHIMA, Michihiro, Osaka-Shi Osaka 540-6207 (JP)
(74) Representative: Eisenführ Speiser
(86) International application number: PCT/JP2017/003525
(87) International publication number: WO 2017/159096

(57) **Abstract**

A vacuum heat insulating material includes a sheath material and a core material that is sealed inside the sheath material in a hermetically sealed decompressed state. The sheath material comprises a gas barrier layer and heat sealing layer (22A). Heat sealing layer (22A) contains a heat sealing resin and filler (41) with an aspect ratio exceeding 1. In heat sealing layer (22A), at least some of filler (41) is oriented, with a long-axis direction intersecting with a direction in which heat sealing layer (22A) spreads. Accordingly, there is provided a vacuum heat insulating material capable of preventing entry of a gas to the inside and favorably ensuring the hermetically sealed decompressed state on the inside.

## Description

### TECHNICAL FIELD

The present invention relates to a vacuum heat insulating material formed by blending a layered material into a sheath material, and a home appliance, a house wall, or transportation equipment that is provided with the vacuum heat insulating material.

### BACKGROUND ART

A vacuum heat insulating material is typically configured by sealing a core material inside a sheath material in a hermetically sealed decompressed state (substantially vacuum state). The sheath material has gas barrier properties for maintaining the inside in the substantially vacuum state.

For improving the gas barrier properties, there has hitherto been proposed a configuration where a layered material is blended into a gas barrier layer provided in the sheath material (e.g., see PTLs 1 to 3).

PTLs 1 and 2 each disclose a configuration where a sheath material of a vacuum heat insulating material includes a resin composition layer with gas barrier properties which is made up of resin and an inorganic layered compound. As specific examples of the inorganic layered compound, graphite, phosphate derivative compound, chalcogenide, clay mineral, and the like are described.

PTL 3 discloses a configuration where a sheath material of a vacuum heat insulating material includes a welded layer and a gas barrier layer, and the gas barrier layer contains a layered clay material and a polymer material.

With the configuration where the sheath material of the vacuum heat insulating material includes the gas barrier layer containing the layered material as described above, it is possible to effectively prevent entry of a gas from the outer surface of the vacuum heat insulating material into the inside thereof.

However, the gas may enter the sheath material of the conventional vacuum heat insulating material from the outside by a route not passing through the gas barrier layer (e.g., the end surface of a sealed part). There is thus the possibility that the substantially vacuum state inside the vacuum heat insulating material deteriorates over time.

### Citation Lists

### Patent Literatures

PTL 1: Unexamined Japanese Patent Publication No. H11-182781
PTL 2: Unexamined Japanese Patent Publication No. H11-257580
PTL 3: Unexamined Japanese Patent Publication No. 2009-085255

### SUMMARY OF THE INVENTION

The present invention provides a vacuum heat insulating material capable of preventing the possibility for entry of a gas to the inside and favorably ensuring a hermetically sealed decompressed state on the inside.

Note that the present invention is based on knowledge obtained as a result of intensive studies conducted by the present inventors.

In the case of a configuration where a sheath material includes a gas barrier layer and a heat sealing layer, there is the possibility that a gas enters inside the vacuum heat insulating material via the heat sealing layer. Then, the present inventors have studied a configuration to impart gas barrier properties to a direction in which the heat sealing layer spreads. As a result, the present inventors have uniquely found a configuration, shown below, capable of ensuring the inside of the vacuum heat insulating material in a favorable hermetically sealed decompressed state, to complete the present invention.

That is, the vacuum heat insulating material of the present invention includes a sheath material and a core material that is sealed inside the sheath material in a hermetically sealed decompressed state. The sheath material includes a gas barrier layer and a heat sealing layer, and the heat sealing layer contains a heat sealing resin and filler with an aspect ratio exceeding 1. Then, at least some of the filler is oriented, with its long-axis direction intersecting with a direction in which the heat sealing layer spreads.

According to this configuration, the long-axis direction of the filler is oriented along the direction intersecting with the direction in which the heat sealing layer spreads, to impart the gas barrier properties to the heat sealing layer. This reduces the possibility that in the sealed part of the sheath material, the external air enters inside the vacuum heat insulating material from a marginal part of the sealed part via the heat sealing layer. As a result, it is possible to reduce deterioration in heat insulating performance of the vacuum heat insulating material over time, and is thus possible to provide a vacuum heat insulating material having excellent heat insulating performance over a long period of time.

Further, the vacuum heat insulating material of the present invention includes the sheath material and the core material that is sealed inside the sheath material in the hermetically sealed decompressed state. The sheath material includes a gas barrier layer and a heat sealing layer. The heat sealing layer contains a heat sealing resin and filler with an aspect ratio less than or equal to 5.

According to this configuration, since the aspect ratio of the filler is small, when filler in the same part by weight as in the prior art is added to the heat sealing layer, the filler is disposed more randomly in a direction in which the gas enters. Accordingly, an equivalent shielded area is expanded to enhance a gas entry inhibiting effect. That is, the gas barrier properties can be imparted to the direction in which the heat sealing layer spreads. This reduces the possibility that in the sealed part of the sheath material, the external air enters inside the vacuum heat insulating material from the marginal part of the sealed part via the heat sealing layer. As a result, it is possible to reduce deterioration in heat insulating performance of the vacuum heat insulating material over time, and is thus possible to provide a vacuum heat insulating material having excellent heat insulating performance over a long period of time.

Moreover, a home appliance, a house wall, or transportation equipment, of the present invention is provided with the vacuum heat insulating material having the above configuration.

### BRIEF DESCRIPTION OF THE DRAWINGS

FIG. 1 is a cross-sectional view schematically illustrating an example of a configuration of a vacuum heat insulating material according to an exemplary embodiment of the present invention.
FIG. 2A is a cross-sectional view schematically illustrating a configuration example of a sheath material of the vacuum heat insulating material.
FIG. 2B is a cross-sectional view schematically illustrating another configuration example of the sheath material of the vacuum heat insulating material.
FIG. 2C is a cross-sectional view schematically illustrating still another configuration example of the sheath material of the vacuum heat insulating material.
FIG. 3A is a cross-sectional view schematically illustrating a configuration example of a heat sealing layer containing a layered material, included in the sheath material illustrated in each of FIGS. 2A to 2C.
FIG. 3B is a cross-sectional view schematically illustrating another configuration example of the heat sealing layer containing the layered material, included in the sheath material illustrated in each of FIGS. 2A to 2C.
FIG. 3C is a cross-sectional view schematically illustrating still another configuration example of the heat sealing layer containing the layered material, included in the sheath material illustrated in each of FIGS. 2A to 2C.
FIG. 3D is a cross-sectional view schematically illustrating a configuration example of a conventional heat sealing layer that is illustrated to compare with the configuration of the heat sealing layer containing the layered material, included in the sheath material of the present exemplary embodiment.
FIG. 4A is a partial cross-sectional view schematically illustrating a state of preventing entry of the external air in the heat sealing layer illustrated in FIG. 3A in the vacuum heat insulating material using the sheath material that includes the heat sealing layer.
FIG. 4B is a partial cross-sectional view schematically illustrating a state of not being able to prevent entry of the external air in the conventional heat sealing layer illustrated in FIG. 3D in the vacuum heat insulating material using the sheath material that includes the heat sealing layer.

### DESCRIPTION OF EMBODIMENT

An exemplary embodiment of the present invention will be described below with reference to the drawings. Note that this exemplary embodiment is not intended to limit the present invention. In the following, through all the drawings, identical or equivalent parts are given identical reference marks, and repeated description will be omitted.

### (Exemplary Embodiment)

The exemplary embodiment of the present invention will be specifically described below by being divided into items of "Vacuum heat insulating material", "Sheath material", "heat sealing layer", "Manufacturing method for sheath material", Manufacturing method for vacuum heat insulating material and applications thereof', and some other items.

### [Vacuum heat insulating material]

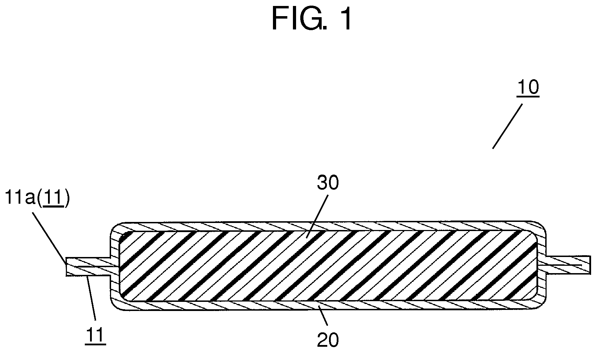

First, a configuration of a vacuum heat insulating material according to the exemplary embodiment of the present invention will be described with reference to FIG. 1.

FIG. 1 is a cross-sectional view schematically illustrating a configuration example of a vacuum heat insulating material according to the exemplary embodiment of the present invention.

As illustrated in FIG. 1, vacuum heat insulating material 10 of the present exemplary embodiment is made up of sheath material (outer covering material) 20, core material 30, and the like. Core material 30 is sealed inside sheath material 20 in a hermetically sealed decompressed state (substantially vacuum state).

Sheath material 20 is formed of a saclike member having gas barrier properties. In the present exemplary embodiment, sheath material 20 is formed into the saclike shape by, for example, making two laminated sheets face each other and sealing the periphery of the laminated sheets. In the sealed section on the periphery, core material 30 does not exist inside, and the laminated sheets are in contact with each other to constitute sealed part 11. Sealed part 11 is formed in a fin shape extending from the body of vacuum heat insulating material 10 to the circumference thereof.

In the present exemplary embodiment, a circumferential edge portion of sealed part 11 (especially, the outer end surface of sealed part 11 and its vicinity portion) will be referred to as "marginal part 11a" in description. A specific configuration of sheath material 20 will be described later.

In this case, a material for core material 30 is not particularly limited so long as being a member having heat insulating properties. Specific examples of the material include known materials such as a fiber material and a foam material.

In the present exemplary embodiment, as core material 30, for example, an inorganic fiber made of fiber of an inorganic material is used. Specific examples of the inorganic fiber include glass fiber, ceramic fiber, slag wool fiber, and rock wool fiber.

Core material 30 is, for example, shaped into a platy form and then used. The operability of core material 30 is thus improved. Further, core material 30 is given the surface smoothness, and the appearance characteristic thereof is thus improved. In this case, other than the above inorganic fiber, a known binder material, a powder, and the like may be contained. Introducing these materials contributes to improvement in physical properties, such as strength, uniformity, and stiffness, of core material 30.

Besides the above inorganic fiber, the examples of core material 30 include a thermosetting foam. The thermosetting foam is formed by foaming a thermosetting resin or a resin composition containing this resin (thermosetting resin composition) by a known method. The thermosetting resin is not particularly limited, and specific examples of the thermosetting resin include an epoxy resin, a phenol resin, an unsaturated polyester resin, a urea resin, a melamine formaldehyde resin, polyimide, and polyurethane. At this time, a forming method for the thermosetting foam is not particularly limited, and the thermosetting foam may be formed by foaming a known foaming agent in known conditions.

Moreover, the examples of the material for core material 30 besides the inorganic fiber and the thermosetting foam described above include known organic fibers (e.g., fibers made of organic materials such as polyethylene, polyethylene terephthalate (PET), and polypropylene). In this case, a specific sort of the organic fiber is not particularly limited.

Vacuum heat insulating material 10 of the present exemplary embodiment is configured as described above.

### [Sheath material]

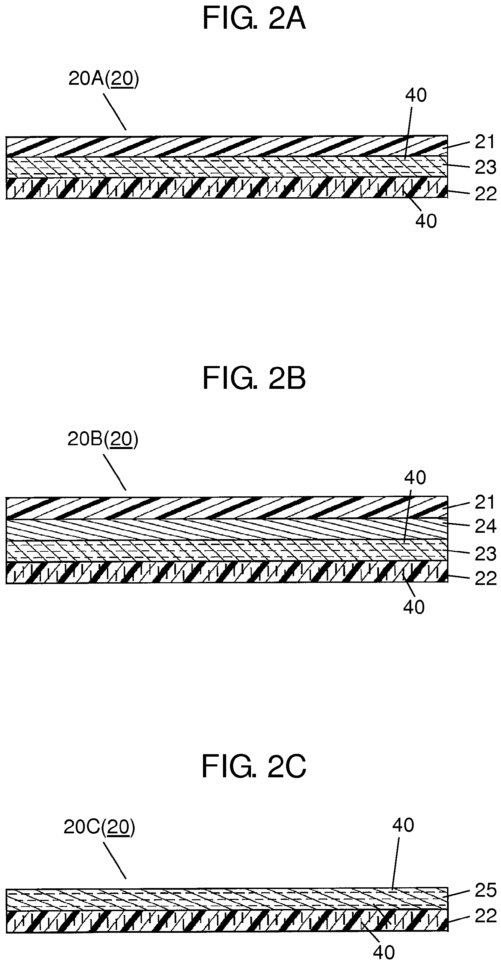

Next, a specific configuration examples of sheath material 20 included in above vacuum heat insulating material 10 will be described with reference to FIGS. 2A to 2C.

FIG. 2A is a cross-sectional view schematically illustrating a configuration example of a sheath material of the vacuum heat insulating material. FIG. 2B is a cross-sectional view schematically illustrating another configuration example of the sheath material of the vacuum heat insulating material. FIG. 2C is a cross-sectional view schematically illustrating still another configuration example of the sheath material of the vacuum heat insulating material.

As illustrated in FIGS. 2A to 2C, sheath material 20 of the present exemplary embodiment is exemplified by sheath materials 20A, 20B, 20C, and the like each made up of a laminated sheet with a multi-layered structure. Sheath materials 20A, 20B, 20C include gas barrier layers 23, 24, 25 while including heat sealing layer 22.

First, the configuration of sheath material 20A as an example of sheath material 20 will be described with reference to FIG. 2A.

As illustrated in FIG. 2A, sheath material 20A is made up of a laminated sheet with a three-layered structure including protective layer 21, heat sealing layer 22, and gas barrier layer 23. Gas barrier layer 23 is disposed as sandwiched between protective layer 21 and heat sealing layer 22.

Protective layer 21 constitutes the outer surface of vacuum heat insulating material 10 in contact with the external air. Meanwhile, heat sealing layer 22 constitutes the inner surface of vacuum heat insulating material 10 in contact with core material 30.

Heat sealing layer 22 and gas barrier layer 23 contain filler 40 described later.

Sheath material 20A is configured as described above.

Hereinafter, the side of protective layer 21, namely, the side to become the outer surface of vacuum heat insulating material 10 will be referred to as the "upper side", and the side of heat sealing layer 22, namely, the side to become the inner surface of vacuum heat insulating material 10 will be referred to as the "lower side."

Next, a configuration of sheath material 20B as an example of sheath material 20 will be described with reference to FIG. 2B.

As illustrated in FIG. 2B, sheath material 20B is made up of a laminated sheet with a four-layered structure including protective layer 21, heat sealing layer 22, and two-layered gas barrier layer 23 and gas barrier layer 24. Gas barrier layers 23, 24 with the two-layered configuration are disposed as sandwiched between protective layer 21 and heat sealing layer 22.

That is, sheath material 20B is formed by laminating protective layer 21, gas barrier layer 24, gas barrier layer 23, and heat sealing layer 22 in order from the top toward the bottom. Similarly to sheath material 20A, also in sheath material 20B, at least heat sealing layer 22 contains filler 40 described later.

Sheath material 20B illustrated in FIG. 2B is illustrated taking as an example a configuration where lower-side gas barrier layer 23 contains filler 40 and upper-side gas barrier layer 24 does not contain filler.

The description has been given taking as an example the configuration where two gas barrier layers 23, 24 are sandwiched between protective layer 21 and heat sealing layer 22 in above sheath material 20B. However, a configuration where three or more gas barrier layers are sandwiched may be formed. It is thereby possible to further enhance a gas barrier effect.

Sheath material 20B is configured as described above.

Note that the configuration of sheath material 20 of the present exemplary embodiment is not limited to the configuration of each of laminated sheets 20A, 20B, provided with protective layer 21, heat sealing layer 22, and one or more gas barrier layers 23.

For example, a configuration illustrated in FIG. 2C may be formed where heat sealing layer 22 and a layer having gas barrier properties are included as sheath material 20.

That is, as is sheath material 20C illustrated in FIG. 2C, the sheath material may be made up of a laminated sheet with a two-layered structure including upper-side gas barrier layer 25 and lower-side heat sealing layer 22. In this case, gas barrier layer 25 has a function of a "protective layer-gas barrier layer" which also serves as protective layer 21.

Note that gas barrier layer 25 being the protective layer-gas barrier layer illustrated in FIG. 2C is illustrated taking as an example the configuration containing filler 40, but a configuration containing no filler may be formed.

That is, gas barrier layers 23, 24, 25 constituting sheath materials 20A, 20B, 20C may be configured to either contain or not to contain the filler when heat sealing layer 22 containing filler 40 is provided.

Further, although not illustrated, in the case of a configuration where a single-layered gas barrier layer serves as both protective layer 21 and heat sealing layer 22, sheath material 20 may be made up only of the single-layered gas barrier layer. In this case, the single-layered gas barrier layer needs to contain the filler in the same manner as heat sealing layer 22.

Further, the example has been described above where protective layer 21, heat sealing layer 22, and one or more gas barrier layers 23, 24, 25 constitute sheath material 20, but the configuration is not limited to this. Other than the above layer configuration, the sheath material may be configured including a layer that has another function (e.g., a layer with high piercing strength). It is thereby possible to further impart the function of the laminated layers, such as improvement in piercing strength, to the sheath material.

Sheath material 20 of the present exemplary embodiment is configured as described above.

Next, protective layer 21 constituting a part of sheath material 20 will be described.

Protective layer 21 has a function of protecting the outer surface (front surface) of vacuum heat insulating material 10 in contact with the external air.

A specific material for protective layer 21 is not particularly limited, and may only be a resin having durability in terms of heat resistance, moisture resistance, strength, and the like at least during a service period of protective layer 21, in accordance with the application thereof. Specific examples include polyethylene terephthalate (PET), nylon (polyamide, PA), polycarbonate (PC), polyimide (PI), polyether ether ketone (PEEK), polyphenylene sulfide (PPS), polysulphone (PPS), and ultra-high molecular weight polyethylene (U-PE, UHPE, or UHMWPE).

Note that the above resins constituting protective layer 21 may be used singly, or two sorts or more of the resins may be used in appropriate combination as a polymer alloy. In the case of the polymer alloy, other than the resins preferable as protective layer 21, such resins may be included as a block copolymer like a block polypropylene and a random copolymer.

Further, protective layer 21 may contain components other than the resins described above, such as various additives like an oxidant inhibitor, a flame retardant, and a stabilizer. That is, protective layer 21 may be made up of either a resin alone or a resin composition containing another component.

Further, the example has been illustrated where protective layer 21 is made up of the one-layered (single-layered) resin film in each of sheath materials 20A, 20B, 20C illustrated in FIGS. 2A to 2C, but protective layer 21 may be configured by laminating a plurality of resin films. Note that the thickness of protective layer 21 is not particularly limited so long as being a thickness within a predetermined range (typically, for example, a range from several µm to several 100 µm) capable of protecting sheath material 20 and the outer surface of vacuum heat insulating material 10.

Protective layer 21 in sheath material 20 is configured as described above.

Next, heat sealing layer 22 constituting a part of sheath material 20 will be described.

The laminated sheets constituting sheath material 20 is made to face each other and bonded by heat sealing layer 22, so that heat sealing layer 22 functions as an adhesive layer forming sealed part 11. Furthermore, heat sealing layer 22 also functions as the inner-surface protective layer that protects the inner surface of vacuum heat insulating material 10, such as core material 30.

As described above, heat sealing layer 22 contains filler 40 in the same manner as gas barrier layers 23, 25. However, the orientation direction of filler 40 is different from those in gas barrier layers 23, 25.

That is, filler 40 in heat sealing layer 22 is disposed in a thickness direction of heat sealing layer 22 so as to intersect with a direction in which heat sealing layer 22 spreads (two-dimensional direction).

Note that a specific configuration of heat sealing layer 22 and manufacturing methods for sheath materials 20A, 20B, 20C including heat sealing layer 22 will be described layer.

Heat sealing layer 22 in sheath material 20 is configured as described above.

Next, gas barrier layers 23, 24, 25 constituting a part of sheath material 20 will be described.

Gas barrier layers 23, 24, 25 function as layers that prevent the entry of the external air inside vacuum heat insulating material 10.

In the present exemplary embodiment, at least one layer of the gas barrier layers included in sheath material 20, such as gas barrier layers 23, 25, contains filler 40. With filler 40 contained, the gas barrier properties are further improved.

Note that the gas barrier layer may not particularly contain the filler so long as sheath material 20 is configured to have a function of being able to exert favorable gas barrier properties. In the case of gas barrier layer 24 not containing the filler illustrated in sheath material 20B, a known film having gas barrier properties can be used as gas barrier layer 24.

Specifically, as the known film, metal foils such as aluminum film, a copper foil, and a stainless are exemplified. There is also exemplified a deposited film having a deposited layer obtained by depositing metal, inorganic oxide, or the like on a resin film to become a substrate. Further, as the known film for gas barrier layer 24, there is exemplified a film (coating deposited film) obtained by performing known coating processing on the surface of the deposited film. However, gas barrier layer 24 is not particularly limited to the known film exemplified above.

The metal or the inorganic oxide which is deposited on the deposited film or the coating deposited film is not particularly limited, and examples thereof include aluminum, copper, alumina, and silica.

Further, a resin constituting a resin film to become a substrate of the deposited film or the coating deposited film is not particularly limited, and examples of the resin include polyethylene terephthalate (PET), and ethylene-vinylalcohol copolymer (EVOH).

Similarly to protective layer 21 or heat sealing layer 22 described above, the resin film made up of either a resin alone or a resin composition containing a component except for the resin. For example, when the gas barrier layer 24 is made up of a metal foil, a resin layer or some other layer may be laminated on the metal foil. That is, gas barrier layer 24 may have either a single-layered structure or a multi-layered structure.

Meanwhile, gas barrier layers 23, 25 containing filler 40 may only have a configuration where filler 40 is dispersed in the resin or the resin composition. As a specific resin or resin composition, a resin or a resin composition similar to the resin film (the substrate such as the deposited film) exemplified in gas barrier layer 24 can be used.

In the case of gas barrier layer 25 that functions as the protective layer-gas barrier layer illustrated in FIG. 2C, as the resin or the resin composition, a resin or a resin composition similar to that for protective layer 21 described above can be used.

Further, the resin or the resin composition used for heat sealing layer 22 described later may be used as the material for gas barrier layers 23, 24, 25.

Moreover, the thickness of each of gas barrier layers 23, 24, 25 is not particularly limited so long as being a thickness in a predetermined range in which the gas barrier properties can be exerted in accordance with the quality of the material for each of gas barrier layers 23, 24, 25. At this time, for example, in the case of gas barrier layers 23, 25 containing filler 40, the thickness may be set considering not only the conditions such as the quality of the material but also the sorts, the additive amount, and the like of filler 40. Further, for example, when the plurality of gas barrier layers 23, 24 illustrated in FIG. 2B are included, the thickness may be set considering the gas barrier properties in the whole of the plurality of gas barrier layers.

As filler 40 in gas barrier layers 23, 25, either filler 40 similar to filler 40 contained in heat sealing layer 22 or filler different therefrom may be used. Typical filler 40 will be described later along with a specific configuration of heat sealing layer 22.

Sheath material 20 of the present exemplary embodiment is configured as described above.

### [Heat sealing layer]

Next, heat sealing layer 22 constituting a part of sheath material 20 described above will be described.

As described in [Sheath material], heat sealing layer 22 contains filler 40 and functions as the adhesive layer and the inner-surface protective layer of sheath material 20.

First, the function of heat sealing layer 22 as the adhesive layer will be described taking as an example the configuration of sheath material 20A illustrated in FIG. 2A.

In the case of sheath material 20A made up of the laminated sheet having the three-layered structure illustrated in FIG. 2A, heat sealing layers 22 which are two laminated sheets are disposed so as to face each other, and a predetermined section (e.g., circumferential edge) is heated. Hence, sheath materials 20A are heat-sealed using heat sealing layer 22 as the adhesive layer. That is, the periphery of sheath materials 20A made to face each other is heat-sealed to form saclike sheath material 20A as described above.

Next, the function of heat sealing layer 22 as the inner-surface protective layer will be described.

In the case of sheath material 20A illustrated in FIG. 2A, one surface (outer surface) of gas barrier layer 23 is protected by protective layer 21. Similarly, the other surface (inner surface) of gas barrier layer 23 is protected by heat sealing layer 22. In this case, protective layer 21 functions as an "outer-surface protective layer" as seen from gas barrier layer 23. Meanwhile, heat sealing layer 22 functions as an "inner-surface protective layer".

Core material 30 and the like are sealed inside sheath material 20 of vacuum heat insulating material 10. At this time, heat sealing layer 22 covers the surface (inner surface side) of gas barrier layer 23. Hence, heat sealing layer 22 can reduce or avoid an influence on gas barrier layer 23 by the sealed matter such as core material 30 on the inside.

Note that a material for heat sealing layer 22 is not particularly limited so long as being a material having heat sealing properties capable of melting and adhesion by heating. For example, the material may only be various thermoplastic resins (heat sealing resins). Specific examples of the material include resins such as high density polyethylene (HDPE), low density polyethylene (LDPE), linear low-density polyethylene (LLDPE), ultra-high molecular weight polyethylene (U-PE, UHPE, or UHMWPE), polypropylene (PP), ethylene-vinyl acetate copolymer (EVA), and nylon (polyamide, PE). Among these, thermoplastic resins having melting points lower than and equal to 250°C, such as polyethylenes, polypropylene, and EVA are preferred more. Accordingly, heat sealing layer 22 has certain gas barrier properties and can perform heat sealing in a temperature range that makes heat sealing layer 22 industrially easily usable.

The above resins constituting heat sealing layer 22 may be used singly, or two sorts or more of the resins may be used in appropriate combination as a polymer alloy. In the case of the polymer alloy, other than the resins preferable as heat sealing layer 22, such resins may be included as a block copolymer like a block polypropylene and a random copolymer.

Further, heat sealing layer 22 may contain components other than the resins described above, such as various additives like an oxidant inhibitor, a flame retardant, and a stabilizer. That is, heat sealing layer 22 may be made up of either a resin alone or a resin composition containing another component.

Further, similarly to protective layer 21, the example has been illustrated where heat sealing layer 22 is made up of the one-layered (single-layered) resin film in each of sheath materials 20A, 20B, 20C illustrated in FIGS. 2A to 2C, but heat sealing layer 22 may be configured by laminating a plurality of resin films. It is thereby possible to further improve strength of sheath material.

The thickness of heat sealing layer 22 is not particularly limited, and may only be such a thickness (e.g., several tens µm or larger) as to be able to exert sufficient adhesive properties when sheath materials 20 are bonded to each other. Further, the thickness of heat sealing layer 22 is more preferably a thickness in such a range (e.g., several tens µm or larger) as to be able to protect the inner surface of sheath material 20 as the inner-surface protective layer. Accordingly, for example, when a fiber-based core material is used, it is possible to prevent formation of a through hole due to piercing from the inside by the fiber and possible to improve the reliability.

Moreover, for filler 40 contained in each of heat sealing layer 22 and gas barrier layers 23, 25, a known laminated sheet having the gas barrier properties, such as sheath material 20, can be used.

Typically, in the field of the resins or the resin compositions, filler is added for the purpose of imparting various characteristics including the gas barrier properties, adjustment of physical properties, improvement in processability, reduction in amount (an increase in height) of resin in a molded article, and the like.

That is, in vacuum heat insulating material 10 of the present exemplary embodiment, filler 40 is added particularly for improving the gas barrier properties of sheath material 20. Thus, known filler which is used in the field of improving the gas barrier properties is applicable to filler 40. At this time, as filler 40 of the present exemplary embodiment, it is particularly preferable to use filler having directionality with an aspect ratio that exceeds at least 1.

For example, in the case of granular filler in a spherical or an amorphous shape, the filler substantially has no directionality while being contained in the resin or the resin composition. However, in the case of filler made of a material in a needle-like, fibrous, or layered shape or some other shape, the filler has a predetermined horizontal-to-vertical ratio or aspect ratio, and can thus be placed with directionality in the resin or the resin composition. At this time, among the filler having the directionality, for example, the layered filler capable of making the shielded area large is more preferred from the viewpoint of improving the gas barrier properties, like vacuum heat insulating material 10 of the present exemplary embodiment.

Note that the filler of the layered material is not particularly limited, and examples thereof include layered silicates such as clay mineral, synthesized hectorite, and denatured bentonite. Similarly, the examples include scale-like (flake-like, sheet-like) particles of metals or metal compounds, such as aluminum scale, iron oxide scale, strontium titanate scale, silver scale, stainless scale, and zinc scale. The examples also include metal foils such as an aluminum foil, a zinc foil, a bronze foil, a nickel foil, and an indium foil. The examples further include nonmetallic inorganic compounds such as layered silica, hexagonal boron nitride, graphite, silicon scale, and layered niobium titanate.

The filler made of the above layered materials may be used singly, or two sorts or more of the resins may be used in appropriate combination. This enables improvement in the gas barrier properties and adjustment in the additive amount.

Further, among the layered silicates constituting the filler described above, various sorts of clay minerals are known for the clay minerals. That is, these clay minerals can also be used as the layered material. A specific clay mineral is not particularly limited, and examples thereof include one-to-one layer types such as lizardite, amesite, kaolinite, dickite, halloysite, talc, and pyrophyllite. Similarly, the examples include two-to-one layer types such as saponite, hectorite, montmorillonite, beidellite, 3-octahedral vermiculite, 2-octahedral vermiculite, phlogopite, biotite, lepidolite, illite, muscovite, paragonite, clintonite, margarite, clinochlore, chamosite, nimite, donbassite, cookeite, and sudoite. The examples further include misfit types such as antigorite, greenalite, and caryopilite. Note that clintonite described above is classified into the misfit type as well as the two-to-one layer type.

As the layered material, the above clay minerals may be used singly, or two sorts or more of the resins may be used in appropriate combination. Further, the clay mineral may be appropriately combined with one or more of layered materials except for the clay mineral and used as filler. This enables improvement in the gas barrier properties and adjustment in the additive amount.

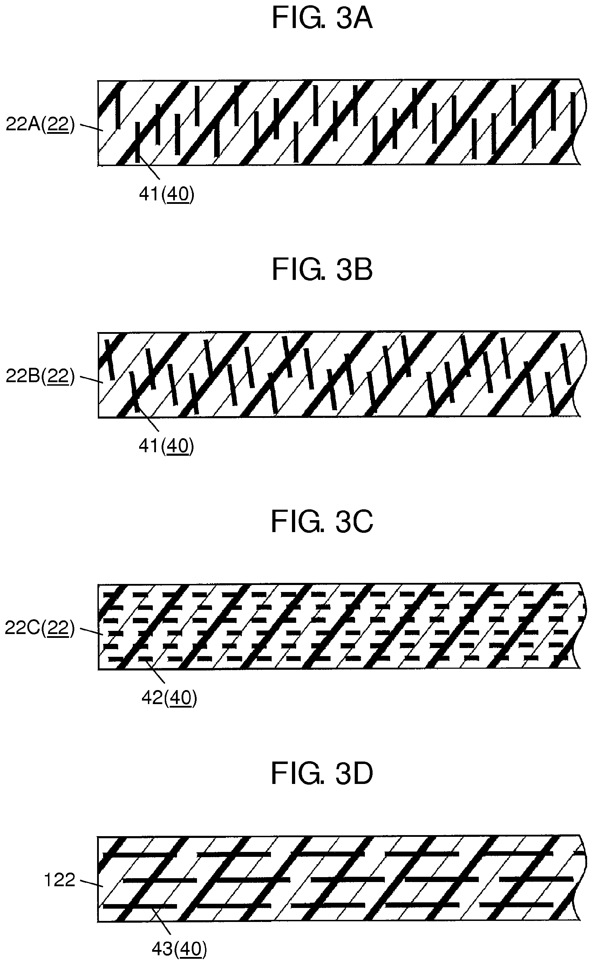

Hereinafter, the orientation direction of the filler which is made up of the above layered material oriented in heat sealing layer 22 and has an aspect ratio exceeding 1 will be specifically described with reference to FIGS. 3A to 3D.

FIG. 3A is a cross-sectional view schematically illustrating a configuration example of heat sealing layer 22 containing the layered material, included in sheath material 20 illustrated in FIGS. 2A to 2C. FIG. 3B is a cross-sectional view schematically illustrating another configuration example of the heat sealing layer containing the layered material, included in the sheath material illustrated in each of FIGS. 2A to 2C. FIG. 3C is a cross-sectional view schematically illustrating still another configuration example of the heat sealing layer containing the layered material, included in the sheath material illustrated in each of FIGS. 2A to 2C. FIG. 3D is a cross-sectional view schematically illustrating a configuration example of a conventional heat sealing layer that is illustrated to compare with the configuration of the heat sealing layer containing the layered material, included in the sheath material of the present exemplary embodiment.

Normally, when the above layered material is blended into heat sealing layer 22 or gas barrier layers 23, 25, the long-axis direction (long-side direction) of the layered material is oriented along a direction (horizontal direction (two-dimensional)) in which each layer spreads.

In contrast, in the present exemplary embodiment, as illustrated in FIGS. 3A and 3B, the long-axis direction of at least some of the layered material contained in heat sealing layer 22 is oriented along a direction (intersecting direction) intersecting with the direction in which heat sealing layer 22 spreads.

Specifically, in heat sealing layer 22A illustrated in FIG. 3A, the long-axis direction of filler 41 made of the layered material is, for example, oriented intersecting with, so as to be vertical to, the horizontally spreading direction in which heat sealing layer 22A spreads. That is, the long-axis direction of filler 41 illustrated in FIG. 3A is oriented along a direction (orthogonal direction, normal direction) orthogonal to the spreading direction.

In heat sealing layer 22B illustrated in FIG. 3B, the long-axis direction of filler 41 is oriented in a state not being vertical but inclined at, for example, about 80 degrees with respect to the horizontal direction.

On the other hand, in conventional heat sealing layer 122 illustrated in FIG. 3D, the long-axis direction of filler 43 is oriented parallelly along the direction in which heat sealing layer 122 spreads.

In the above exemplary embodiment, the example has been described taking the configuration as an example where the long-axis direction of the filler is oriented in the direction intersecting with the direction in which heat sealing layer 22 spread as illustrated in FIGS. 3A and 3B. However, the configuration is not limited thereto.

For example, as illustrated in FIG. 3C, filler 42 of the layered material contained in heat sealing layer 22C may be configured to be oriented along the spreading direction as in conventional heat sealing layer 122 illustrated in FIG. 3D. In this case, the aspect ratio of filler 42 needs to be made less than or equal to a predetermined value as compared to the aspect ratio of filler 41 of the typical layered material. Note that the aspect ratio depends on the shape of the filler and is defined by, for example, a ratio between the length of the long axis and the length of the short axis, a ratio between the length and the diameter, or the like.

Specifically, the aspect ratio of filler 41 illustrated in each of FIGS. 3A and 3B is not particularly limited and is preferably within a range from 50 to 3000, for example. Further, the aspect ratio of filler 41 is more preferably within a range from 100 to 2000. This makes it possible to easily obtain the filler.

Meanwhile, the aspect ratio of filler 42 illustrated in FIG. 3C is preferably less than or equal to 5 as described later.

Note that the particle size of filler 41 is not particularly limited. While the maximum width (maximum length) of filler 41 in the long-axis direction depends on the degree of inclination of filler 41, especially when filler 41 is oriented in the orthogonal direction illustrated in FIG. 3A, the maximum width is preferably smaller than the thickness of heat sealing layer 22. This is because, when the maximum width of filler 41 is equivalent to or larger than the thickness of heat sealing layer 22, filler 41 may protrude from the interface of heat sealing layer 22.

As described above, the filler made of the layered material is oriented in heat sealing layer 22.

That is, in the present exemplary embodiment, as illustrated in each of heat sealing layers 22A, 22B, filler 41 is oriented so as to intersect with the spreading direction. Hence, the gas barrier properties are imparted to the direction in which each of heat sealing layers 22A, 22B spreads.

Further, as illustrated in heat sealing layer 22C, especially in the case of filler 42 having a small aspect ratio, filler 42 may be oriented parallel to the spreading direction. In this case, since the aspect ratio of the filler is small, when filler in the same part by weight as in the prior art is added to the heat sealing layer, the filler is disposed more randomly in a direction in which the gas enters. This leads to enhancement of the gas entry inhibiting effect. It is thereby possible to impart the gas barrier properties to the direction in which heat sealing layer 22C spreads.

That is, with the above orientation configuration of the filler, it is possible to effectively prevent the entry of the external air from marginal part 11a in sealed part 11 of sheath material 20 via each of heat sealing layers 22A, 22B, 22C. As a result, it is possible to reduce deterioration in heat insulating performance of vacuum heat insulating material 10 over time, and is thus possible to provide vacuum heat insulating material 10 having excellent heat insulating performance over a long period of time.

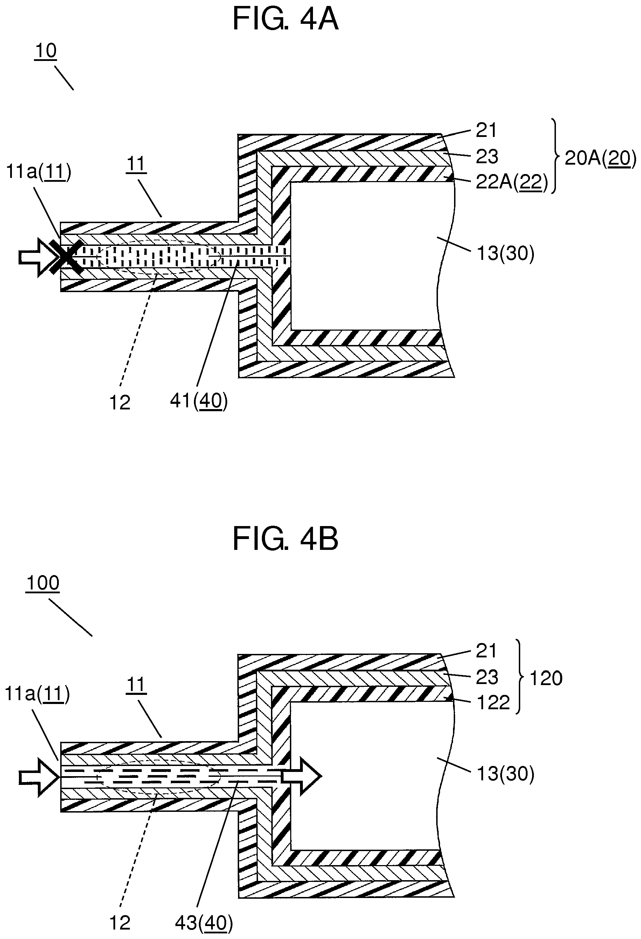

In the following, the gas barrier properties obtained by the orientation of the filler will be conceptually described with reference to FIGS. 4A and 4B.

FIG. 4A is a partial cross-sectional view schematically illustrating the state of preventing the entry of the external air in the heat sealing layer illustrated in FIG. 3A in the vacuum heat insulating material using the sheath material that includes the heat sealing layer. FIG. 4B is a partial cross-sectional view schematically illustrating the state of not being able to prevent the entry of the external air in the conventional heat sealing layer illustrated in FIG. 3D in the vacuum heat insulating material using the sheath material that includes the heat sealing layer.

That is, FIG. 4A illustrates the configuration of the periphery of sealed part 11 in vacuum heat insulating material 10 according to the present exemplary embodiment. FIG. 4B illustrates the configuration of the periphery of sealed part 11 in conventional vacuum heat insulating material 100.

Further, FIGS. 4A and 4B each make the illustration taking as an example vacuum heat insulating material 10 with a configuration including sheath material 20 made up of the laminated sheet with the three-layered structure illustrated in FIG. 2A.

That is, sheath material 20A illustrated in FIG. 4A is configured by the three-layered structure including heat sealing layer 22A illustrated in FIG. 3A. Meanwhile, conventional sheath material 120 illustrated in FIG. 4B is configured by the three-layered structure including conventional heat sealing layer 122 illustrated in FIG. 3D.

Specifically, first, as described above, sheath material 20A or sheath material 120 with the three-layered structure is configured in the saclike shape.

Thereafter, as illustrated in FIG. 4A or FIG. 4B, heat sealing layers 22A in sheath material 20A and heat sealing layers 122 of sheath material 120 are made to face each other, and a part of the periphery extending outward from core material 30 in a fin shape is heat-sealed. Heat-sealed part 12 is thus formed on the periphery of each of sheath material 20A and sheath material 120, and sealed part 11 is formed on the circumference thereof.

At the same time, core material 30 is sealed on heat insulating material inside 13 of sheath material 20A or sheath material 120 in the substantially vacuum state.

Note that core material 30 sealed on heat insulating material inside 13 is not illustrated in FIG. 4A or FIG. 4B for convenience of description.

As illustrated in FIGS. 4A and 4B, normally, in either the configuration of vacuum heat insulating material 10 or the configuration of vacuum heat insulating material 100, marginal part 11a in sealed part 11 of sheath material 20A or sheath material 120 is exposed outside and in contact with the external air.

At this time, basically, heat sealing layer 22A or heat sealing layer 122 is vertically covered by gas barrier layer 23. However, the outer peripheral end of heat sealing layer 22A or heat sealing layer 122, which is marginal part 11a, is not covered by gas barrier layer 23.

Further, as described above, heat sealing layer 22A or heat sealing layer 122 constitutes the inner-surface protective layer of vacuum heat insulating material 10 or vacuum heat insulating material 100. Simultaneously, heat sealing layer 22A or heat sealing layer 122 constitutes the inner surface (the peripheral surface as seen from heat insulating material inside 13) of vacuum heat insulating material 10 or vacuum heat insulating material 100.

Therefore, in the case of the configuration illustrated in FIG. 4B, as indicated by a block arrow, the air enters heat insulating material inside 13 from marginal part 11a, which is the exposed outer peripheral end of heat sealing layer 122, via heat sealing layer 122.

At this time, in the configuration of conventional heat sealing layer 122, the long axis of filler 43 contained inside is oriented horizontally along the direction in which heat sealing layer 122 spreads. For this reason, the entry of the air from marginal part 11a may not be prevented by filler 43, and the air may enter heat insulating material inside 13. This impairs the substantially vacuum state of heat insulating material inside 13 over time due to the entry of the external air. This can result in deterioration in heat insulating performance of vacuum heat insulating material 100 over time.

Then, as illustrated in FIG. 4A, in the configuration of vacuum heat insulating material 10 of the present exemplary embodiment, the long axis of filler 41 contained in heat sealing layer 22A is oriented in the direction intersecting with the direction in which heat sealing layer 22A spread. Note that FIG. 4A illustrates as an example heat sealing layer 22A oriented in the substantially vertical direction (orthogonal direction) described in FIG. 3A. It is thereby possible to substantially prevent the entry of the air from marginal part 11a exposed outside, as indicated by a cross in FIG. 4A. As a result, it is possible to favorably maintain the substantially vacuum state of heat insulating material inside 13 over a long period of time and prevent deterioration in heat insulating performance over time.

Next, a description will be given of the gas barrier properties obtained by orientation of filler 42 having a small aspect ratio, illustrated in FIG. 3C.

As described above, heat sealing layer 22C illustrated in FIG. 3C contains filler 42 having a small aspect ratio (less than or equal to 5). In this case, even when filler 42 in the same part by weight as in filler 43 contained in conventional heat sealing layer 122 is added to heat sealing layer 22C, filler 42 is disposed randomly as so as to spread over the inside of heat sealing layer 22C. Therefore, the equivalent shielded area increases as compared to filler 43 with a large aspect ratio in conventional heat sealing layer 122, thus facilitating filler 42 to prevent the entry of the air. It is thereby possible to prevent deterioration in heat insulating performance of vacuum heat insulating material 10 over time.

Heat sealing layer 22 of the present exemplary embodiment is configured as described above.

### [Manufacturing method for sheath material]

Hereinafter, a manufacturing method for sheath material 20 will be described.

The manufacturing method for sheath material 20 is not particularly limited, and a known manufacturing method for a laminated sheet with a multi-layered structure can be used.

However, heat sealing layer 22 in sheath material 20 of the present exemplary embodiment contains the filler as described above. Further, as the preferable exemplary embodiment, gas barrier layers 23, 25 also contain the filler.

Then, first, a manufacturing method for heat sealing layer 22 containing the filler in sheath material 20 will be described.

Note that the manufacturing method for sheath material 20 may only be a manufacturing method including a known layer formation step in which heat sealing layer 22 is formed by containing the filler so as to be dispersed in the resin or the resin composition.

Further, in the case of heat sealing layer 22C illustrated in FIG. 3C among heat sealing layer 22 described above, a layer formation step similar to that for conventional heat sealing layer 122 illustrated in FIG. 3D can be adopted except that filler 42 with the aspect ratio less than or equal to 5 is selected.

On the other hand, in the case of heat sealing layers 22A, 22B illustrated in FIGS. 3A and 3B, differently from heat sealing layers 22C, 122 illustrated in FIGS. 3C and 3D, filler 41 needs to be oriented along the intersecting direction. Therefore, as the layer formation step for each of heat sealing layers 22A, 22B, in addition to the step of dispersing filler 41 in the resin or the resin composition, a method capable of adjusting the orientation direction of filler 41 is adopted.

The method capable of adjusting the orientation direction of filler 41 is not particularly limited, and examples of the method include a method of forming a flow in the resin or the resin composition at the time of molding (hereinafter referred to as "molding-time flow formation method"). The examples of the method also include a method of laminating a plurality of sheets with filler 41 oriented in the spreading direction, rotating the sheets at a desired angle (orientation direction), and slicing the laminated sheets (hereinafter referred to as "laminated sheets slicing method").

Hereinafter, an example of the "molding-time flow formation method" will be described.

First, molds in various shapes are prepared in advance.

Next, filler 41 made of the layered material is blended into the resin or the resin composition and then melted and mixed.

Next, the melted mixture, or a pellet obtained by solidifying the melted mixture, is molded by hot press. At this time, the mold is changed to a mold in a different shape to form a flow in the melted mixture. The orientation direction of filler 41 in each of heat sealing layers 22A, 22B is thus adjusted to a predetermined direction.

Next, an example of the "laminated sheets slicing method" will be described specifically.

First, filler 41 made of the layered material is blended into the resin or the resin composition and then melted and mixed.

Next, the melted mixture is compressed to be formed into a sheet. There is thus formed a single-layered sheet with filler 41 oriented in the direction in which the resin or the resin composition spreads.

Next, the formed single-layered sheets are laminated to form a laminated sheet having a height nearly equal to the area of the sheath material, for example.

Subsequently, the formed laminated sheet is rotated at a desired angle and then sliced while the orientation direction of filler 41 is maintained so as not to be impaired. The orientation direction of filler 41 is thereby adjusted to a predetermined direction (desired intersecting direction).

In the manner as thus described, heat sealing layer 22 in sheath material 20 is manufactured.

Hereinafter, a manufacturing method for the gas barrier layer containing the filler in sheath material 20 will be described.

The layer formation step for gas barrier layers 23, 25 containing the filler is not particularly limited, either, and examples of the step include a melting-mixing method and a coating method. The melting-mixing method or the coating method is also used for forming the single-layered sheet in the "laminated sheets slicing method" among the layer formation steps for heat sealing layers 22A, 22B.

First, an example of the melting-mixing method will be described along with the manufacturing method for the laminated sheet (sheath material 20).

To begin with, the resin (or resin composition) is mixed with the layered material being the filler, and the mixture is put into a melting-mixer.

Next, the resin is heated and mixed by the melting-mixer, to be melted. At this time, pressure is applied to disperse the layered material in the resin. A resin mixture with the layered material dispersed therein is thus obtained.

Next, the obtained resin mixture is molded into a film shape (sheet shape) by extrusion molding to form a layered-material dispersing resin film. Note that the layered-material dispersing resin film corresponds to gas barrier layer 23, for example.

Subsequently, a resin film to become protective layer 21 and a resin film to become heat sealing layer 22 are laminated on the obtained layered-material dispersing resin film. In this manner, sheath material 20A made up of the laminated sheet with the three-layered structure, illustrated in FIG. 2A, is prepared.

In the following, an example of the coating method will be described along with the manufacturing method for the laminated sheet (sheath material 20).

To begin with, for example, a sort of various adhesives or the like is applied as an anchor coat agent to one surface of resin film to become protective layer 21 (e.g., the surface to become the lower side (inner surface side) of protective layer 21 in FIG. 2A).

Next, the resin (or resin composition) is dissolved into a solvent such as carboxymethyl cellulose, while the layered material being the filler is added, to be agitated and mixed. A layered-material containing resin solution is thus obtained.

Next, the layered-material containing resin solution is applied onto a layer of the anchor coat agent applied to protective layer 21, followed by drying. Note that the method for applying the layered-material containing resin solution is not particularly limited, and any of a roll method such as a gravure method, a spray method, and some other method may be used. By the drying, gas barrier layer 23 is formed on one surface of protective layer 21.

Next, for example, a urethane adhesive or the like is applied to one surface of gas barrier layer 23, which has not been made to adhere to protective layer 21. Then, the resin film to become heat sealing layer 22 is laminated on the surface of gas barrier layer 23 where the adhesive has applied by, for example, a dry laminate method or some other method. In this manner, sheath material 20A made up of the laminated sheet with the three-layered structure, illustrated in FIG. 2A, is manufactured.

Sheath material 20 is manufactured as described above.

### [Manufacturing method for vacuum heat insulating material and applications thereof]

In the following, a description will be given of a manufacturing method for the vacuum heat insulating material and applications thereof.

First, the manufacturing method for vacuum heat insulating material 10 will be described.

Note that a specific manufacturing method for vacuum heat insulating material 10 is not particularly limited, and a known manufacturing method can be used.

For example, in the manufacturing method for vacuum heat insulating material 10 of the present exemplary embodiment, to begin with, sheath material 20 is formed into a saclike shape described below.

Next, core material 30, and another material such as a gas adsorbent as needed, are inserted inside saclike sheath material 20. Then, saclike sheath material 20 described above is hermetically sealed in a hermetically sealed decompressed state (substantially vacuum state). This manufacturing method for vacuum heat insulating material 10 has been adopted.

In this case, a method for forming sheath material 20 into the saclike shape is not particularly limited, and sheath material 20 is formed by a method shown below.

First, two laminated films to become sheath material 20 are prepared. Then, in a state where heat sealing layers 22 of the respective laminated films are disposed so as to face each other, most of the peripheral edge of sheath material 20 is heat-welded. Saclike sheath material 20 is thus formed.

Specifically, when sheath material 20 has a rectangular shape, only one side of four sides is left as an opening, and the peripheral edge except for the opening is heat-sealed. At this time, the heat-welding is conducted so as to surround the center portion of sheath material 20 where core material 30 is accommodated. Saclike sheath material 20 is thus formed.

Next, core material 30 and the like are inserted inside sheath material 20, formed into the saclike shape by the above method, through the opening. At this time, sheath material 20 with core material 30 inserted therein is decompressed in decompression equipment such as decompression chamber. Hence, the inside of saclike sheath material 20 is decompressed through the opening and comes into the substantially vacuum state.

Next, in the decompression equipment, the opening of sheath material 20 is heat-welded to hermetically seal the inside of sheath material 20 in the same manner as the other peripheral edge. In this manner, vacuum heat insulating material 10 illustrated in FIG. 1 is prepared.

Note that conditions such as heat welding and decompression, which are performed in the manufacturing of vacuum heat insulating material 10 described above, are not particularly limited, and various known conditions can be adopted.

Further, a formation method for saclike sheath material 20 is not limited to a formation method using two laminated films. For example, one laminated film may be bent into halves and both side edges may be heat-welded, to prepare saclike sheath material 20 having an opening. Moreover, the laminated film may be shaped into a cylindrical form and one opening may be sealed, to prepare saclike sheath material 20.

Vacuum heat insulating material 10 of the present exemplary embodiment is configured in the manner as thus described.

Vacuum heat insulating material 10 manufactured by the above method exerts highly excellent heat insulating performance since the inside of vacuum heat insulating material 10 is in the hermetically sealed decompressed state (substantially vacuum state).

However, in vacuum heat insulating material 10 described above, with the inside thereof being in the substantially vacuum state, the outer peripheral end of heat sealing layer 22 which is the inner-surface protective layer of heat insulating material inside 13 is exposed in marginal part 11a in sealed part 11. For this reason, the external air enters heat insulating material inside 13 from the outer peripheral end of heat sealing layer 22 via heat sealing layer 22. This may impair the substantially vacuum state of heat insulating material inside 13 over time.

Therefore, in the present exemplary embodiment, heat sealing layer 22 is formed containing the heat sealing resin and the filler. At this time, inside heat sealing layer 22, at least some of the filler is oriented in the direction intersecting with the direction in which heat sealing layer 22 spreads. Further, the filler having the aspect ratio less than or equal to 5 is used and oriented inside heat sealing layer 22. The gas barrier properties are thus imparted to the direction in which heat sealing layer 22 spreads. It is thus possible to effectively reduce the possibility that the external air enters inside heat insulating material inside 13 from marginal part 11a in sealed part 11 of sheath material 20 via heat sealing layer 22.

Vacuum heat insulating material 10 is manufactured as described above.

Next, applications of vacuum heat insulating material 10 manufactured by the above method will be described.

That is, vacuum heat insulating material 10 capable of maintaining the heat insulating performance over a long period of time is applicable to various applications requiring heat insulation.

As an example of a typical heat insulating application, home appliances can be cited. A specific type of the home appliance is not particularly limited, and examples of the home appliance include a refrigerator, a water heater, a rice cooker, and a jar pot.

As another example of the typical heat insulating application, a house wall can be cited.

As still another example of the typical heat insulating application, transportation equipment can be cited. A specific type of the transportation equipment is not particularly limited, and examples of the transportation equipment include a ship such as a tanker, an automobile, and an aircraft.

Note that the present invention is not limited to the description of the above exemplary embodiment, and various modifications are possible within the scope shown in the claims. Further, an exemplary embodiment, obtained by appropriately combining technical means respectively disclosed in different exemplary embodiments and a plurality of modified examples, is also included in the technical scope of the present invention.

As described above, the vacuum heat insulating material of the present invention is provided with a sheath material and a core material that is sealed inside the sheath material in a hermetically sealed decompressed state. The sheath material includes a gas barrier layer and a heat sealing layer, and the heat sealing layer contains a heat sealing resin and filler with an aspect ratio exceeding 1. Then, at least some of the filler is oriented, with a long-axis direction intersecting with a direction in which the heat sealing layer spreads.

According to this configuration, the long-axis direction of the filler is oriented along the direction intersecting with the direction in which the heat sealing layer spreads, to impart gas barrier properties to the heat sealing layer. This reduces the possibility that in the sealed part of the sheath material, the external air enters inside the vacuum heat insulating material from the marginal part of the sealed part via the heat sealing layer. As a result, it is possible to reduce deterioration in heat insulating performance of the vacuum heat insulating material over time, and is thus possible to provide a vacuum heat insulating material having excellent heat insulating performance over a long period of time.

Further, in the vacuum heat insulating material of the present invention, the filler may be configured having an aspect ratio within a range from 50 to 3000.

Moreover, in the vacuum heat insulating material of the present invention, the filler may be configured having an aspect ratio within a range from 100 to 2000.

It is thereby possible to further improve the gas barrier properties imparted to the direction in which the heat sealing layer spreads.

In the vacuum heat insulating material of the present invention, a length of the filler in the long-axis direction may be configured to be smaller than a thickness of the heat sealing layer.

Accordingly, even when the filler is oriented along the intersecting direction, it is possible to prevent protrusion of the filler from the heat sealing layer.

Further, the vacuum heat insulating material of the present invention is provided with a sheath material and a core material that is sealed inside the sheath material in a hermetically sealed decompressed state. The sheath material includes a gas barrier layer and a heat sealing layer. The heat sealing layer may contain a heat sealing resin and filler with an aspect ratio less than or equal to 5.

According to this configuration, since the aspect ratio of the filler is small, it is possible to impart the gas barrier properties to the direction in which the heat sealing layer spreads. This reduces the possibility that in the sealed part of the sheath material, the external air enters inside the vacuum heat insulating material from the marginal part of the sealed part via the heat sealing layer. As a result, it is possible to reduce deterioration in heat insulating performance of the vacuum heat insulating material over time, and is thus possible to provide a vacuum heat insulating material having excellent heat insulating performance over a long period of time.

In the vacuum heat insulating material of the present invention, the heat sealing resin may be a thermoplastic resin having a melting point lower than or equal to 250°C, and the filler may be made of a layered material.

It is thereby possible to obtain a heat sealing layer having favorable gas barrier properties and heat sealing properties.

Further, the home appliance of the present invention is provided with the vacuum heat insulating material having the above configuration.

According to this configuration, the home appliance is provided with the vacuum heat insulating material having excellent heat insulating performance. It is thus possible to reduce power consumption and advance energy saving.

Moreover, the house wall of the present invention is provided with the vacuum heat insulating material having the above configuration.

Furthermore, the transportation equipment of the present invention is provided with the vacuum heat insulating material having the above configuration.

According to these configurations, the house wall or the transportation equipment is provided with the vacuum heat insulating material having excellent heat insulating performance. It is thereby possible to enhance the heat insulating properties inside a house or inside the transportation equipment. In consequence, it is possible to provide the house or the transportation equipment having high energy saving efficiency and high environmental performance.

### INDUSTRIAL APPLICABILITY

The present invention is broadly applicable, over a long period of time, to the field of the vacuum heat insulating material required to have high heat insulating properties and to the field of the home appliance, the house wall, or the transportation equipment that is provided with the vacuum heat insulating material, for example.

### REFERENCE MARKS IN THE DRAWINGS

10, 100: vacuum heat insulating material
11: sealed part
11a: marginal part
12: heat-sealed part
13: heat insulating material inside
20, 20A, 20B, 20C, 120: sheath material
21: protective layer
22, 122: heat sealing layer
22A, 22B, 22C: heat sealing layer
23, 24, 25: gas barrier layer
30: core material
40, 41, 42, 43: filler

## Claims

1. A vacuum heat insulating material comprising:
a sheath material; and
a core material that is sealed inside the sheath material in a hermetically sealed decompressed state,
wherein
the sheath material includes a gas barrier layer and a heat sealing layer,
the heat sealing layer contains a heat sealing resin and filler with an aspect ratio exceeding 1, and
at least some of the filler is oriented, with a long-axis direction intersecting with a direction in which the heat sealing layer spreads.

2. The vacuum heat insulating material according to claim 1, wherein the filler has an aspect ratio in a range from 50 to 3000.

3. The vacuum heat insulating material according to claim 1, wherein the filler has an aspect ratio in a range from 100 to 2000.

4. The vacuum heat insulating material according to claim 1, wherein a length of the filler in the long-axis direction is smaller than a thickness of the heat sealing layer.

5. A vacuum heat insulating material comprising:
a sheath material; and
a core material that is sealed inside the sheath material in a hermetically sealed decompressed state,
wherein
the sheath material includes a gas barrier layer and a heat sealing layer, and
the heat sealing layer contains a heat sealing resin and filler with an aspect ratio less than or equal to 5.

6. The vacuum heat insulating material according to any one of claims 1 or 5, wherein
the heat sealing resin is a thermoplastic resin having a melting point lower than or equal to 250°C, and
the filler is a layered material.

7. A home appliance comprising the vacuum heat insulating material according to any one of claims 1 or 5.

8. A house wall comprising the vacuum heat insulating material according to any one of claims 1 or 5.

9. Transportation equipment comprising the vacuum heat insulating material according to any one of claims 1 or 5.
